# EUROPÄISCHE PATENTSCHRIFT

(11) **EP 2 091 806 B1**
(45) Veröffentlichungstag und Bekanntmachung des Hinweises auf die Patenterteilung: **31.03.2010**
(21) Anmeldenummer: 07817778.9
(22) Anmeldetag: 05.11.2007
(51) Int. Cl.: B62D 35/00, B62D 37/02

(54) **LUFTLEITVORRICHTUNG EINES FAHRZEUGS**
AIR-DIRECTING APPARATUS OF A VEHICLE
DISPOSITIF DE GUIDAGE D'AIR D'UN VÉHICULE

(30) Priorität: 10.11.2006 DE 102006053150
(43) Veröffentlichungstag der Anmeldung: 26.08.2009
(73) Patentinhaber: HS Genion GmbH, 82152 Krailing (DE)
(72) Erfinder: WEGENER, Fritz, 82205 Gilching (DE); SZÜCS, Zsolt, 81245 München (DE)
(74) Vertreter: Bosch, Matthias
(86) Internationale Anmeldenummer: PCT/DE2007/001990
(87) Internationale Veröffentlichungsnummer: WO 2008/055481

(56) Entgegenhaltungen:
- EP-A- 1 840 011
- WO-A-2004/078564
- DE-A1-102004 030 571

## Beschreibung

Die vorliegende Erfindung betrifft eine Luftleitvorrichtung eines Fahrzeugs nach dem Oberbegriff des Anspruchs 1.

Eine derartige Luftleitvorrichtung ist beispielsweise aus der DE 10 2004 030 571 A1 bekannt und umfasst einen im Heckbereich eines Kraftfahrzeugs angeordneten Spoiler, der mittels einer Verstelleinrichtung zwischen einer Ruhestellung, in der im Wesentlichen innerhalb der Fahrzeugkontur liegt, und einer Betriebsform, in der er die Fahrzeugkontur überragt, verstellbar ist. Eine Besonderheit des bekannten Spoilers besteht darin, dass dieser einen Spoilerkorpus und auf beiden Seiten des Spoilerkorpus angeordnete Spoilererweiterungen aufweist, die bezüglich des Spoilerkorpus seitwärts nach außen verlagerbar sind.

Dies besitzt z. B. den Vorteil, dass bei ausgefahrenem Spoiler dessen aerodynamische Wirkung verändert werden kann (durch Vergrößerung der wirksamen Spoilerfläche). Ein weiterer Vorteil besteht darin, dass bei geringen Bauraumanforderungen in der Ruhestellung eine vergleichsweise große aerodynamische Wirkung in der Betriebsstellung erzielbar ist.

Nachteilig ist bei der bekannten Luftleitvorrichtung jedoch der konstruktive Aufwand zur Realisierung der Verlagerbarkeit der Spoilererweiterungen. Außerdem ist bei diesem Stand der Technik die gestalterische Freiheit hinsichtlich der Formgebung des Spoilerkorpus wie auch der Spoilererweiterungen mehr oder weniger eingeschränkt.

Es ist daher eine Aufgabe der vorliegende Erfindung, eine Luftleitvorrichtung der eingangs genannten Art dahingehend zu verbessern, dass trotz einer konstruktiv einfach realisierten Verlagerbarkeit der Spoilererweiterungen ein hohes Ausmaß an gestalterischer Freiheit ermöglicht wird.

Diese Aufgabe wird gemäß der Erfindung dadurch gelöst, dass die Spollererweiterungen jeweils mittels eines im Wesentlichen in Längsrichtung verlaufende Gelenkachsen aufweisenden Viergelenk am Spoilerkorpus angelenkt sind.

Damit kann in konstruktiv einfacher Weise eine Verlagerbarkeit der Spoilererweiterungen bei gleichzeitiger Aufrechterhaltung der gestalterischen Freiheit erzielt werden.

Eine bevorzugte Verwendung der Erfindung besteht für Luftleitvorrichtungen mit einem im Heckbereich eines Kraftfahrzeugs angeordneten Spoiler, insbesondere ausfahrbarem Spoiler.

In einer Ausführungsform ist z. B. vorgesehen, dass der Spoiler aus einer Ruhestellung, in welcher er in einer Karosseriemulde angeordnet ist, in eine Betriebsstellung ausgefahren werden kann, in welcher er von der Karosserie abstehend angeordnet ist. In diesem Fall kann der Spoiler mit nach innen verlagerten Spoilererweiterungen bauraumsparend in eine (relativ kleine) Karosseriemulde eingefahren werden.

Der Begriff "Spoilerkorpus" soll im Rahmen der Erfindung einen durch Fahrtwind anströmbaren Luftleitkörper bezeichnen, der einen aerodynamisch wirksamen Teil des Spoilers bildet und beispielsweise als ein starres, etwa plattenförmiges Luftleitprofil ausgebildet ist. Bei der Formgestaltung des Spoilerkorpus wie auch des gesamten Spoilers kann auf die in diesem technischen Bereich in großer Vielfalt bekannten Gestaltungen zurückgegriffen werden. Zur Verringerung des Auftriebs während der Fahrt bzw. zur Erzeugung eines Abtriebs ist oftmals ein Luftleitprofil vorgesehen, welches etwa die (umgekehrte) Form eines Flugzeug-Tragflügels besitzt.

In einer Ausführungsform ist vorgesehen, dass in einem Zustand des Spoilers mit nach innen verlagerten Spoilererweiterungen ein allenfalls geringfügiger Spalt zwischen den Innenkanten der beiden Spoilererweiterungen vorhanden ist und/oder Außenkanten der beiden Spoilererweiterungen in Querrichtung betrachtet im Wesentlichen an der gleichen Stelle wie die Außenkanten des Spoilerkorpus liegen.

Hierbei kann insbesondere vorgesehen sein, dass in einem Zustand des Spoilers mit nach innen verlagerten Spoilererweiterungen eine von oben betrachtete Kontur der beiden Spoilererweiterungen im Wesentlichen deckungsgleich zu der von oben betrachteten Kontur des Spoilerkorpus ist.

In einer bevorzugten Ausführungsform ist vorgesehen, dass die Spoilererweiterungen an der Oberseite des Spoilerkorpus angelenkt sind. Alternativ kommt z. B. eine Anlenkung an der Unterseite oder Hinterseite des Spoilerkorpus in Betracht.

In einer Ausführungsform ist vorgesehen, dass die Vorderkante und/oder die Hinterkante des Spoilerkorpus gekrümmt verläuft. Dies ist oftmals aus ästhetischen Gründen zu bevorzugen, beispielsweise, wenn eine Karosseriemulde, die zur wenigstens teilweisen Versenkung des Spoilers vorgesehen ist, einen ebenfalls entsprechend gekrümmten Muldenrandverlauf besitzen soll (z. B. in Anpassung an das Design eines Fahrzeughecks). Derartige gekrümmte Verläufe am Spoilerkorpus können mit der erfindungsgemäßen Anlenkung der Spoilererweiterungen gut gehandhabt werden. Dasselbe gilt für etwaig vorzusehende Krümmungen der Vorderkante und/oder der Hinterkante der Spoiler erweiterungen.

Für die gegenseitige Orientierung der Gelenkachsen jedes der Viergelenke gibt es verschiedene Möglichkeiten.

Im einfachsten Fall verlaufen die vier Gelenkachsen eines Viergelenks parallel zueinander ("planares Viergelenk). Zwei Gelenkachsen, die ortsfest bezüglich des Spoilerkorpus angeordnet sind, können hierbei z. B. durch zwei im Wesentlichen gleich lange Lenker mit zwei Gelenkachsen verbunden sein, die ortsfest bezüglich der betreffenden Spoilererweiterung sind.

Der Begriff "im Wesentlichen gleich lang" soll insbesondere den Fall umfassen, dass die größere der betreffenden Längen um höchstens 20 %, insbesondere höchstens 10 % größer als die kleinere der Längen ist.

Insbesondere in diesem Fall ist es auch oftmals günstig, wenn der Abstand zwischen den beiden korpusseitigen Gelenkachsen im Wesentlichen gleich lang wie der Abstand zwischen den beiden erweiterungsseitigen Gelenkachsen ist. Damit kann z. B. in einfacher Weise ein Viergelenk geschaffen werden, mittels welchem die Spoilererweiterung ausgehend von einer bestimmten Orientierung im nach innen verlagerten Zustand (z. B. im Wesentlichen horizontal flächig sich erstreckend) durch eine Verschwenkung der beiden Lenker um etwa 180° nach außen in eine ebensolche horizontale Orientierung verlagert werden können.

Die Verwendung eines planaren Viergelenks zur Auswärtsverlagerung bzw. Einwärtsverlagerung der Spoilererweiterung ermöglicht als solche während der Verlagerungsbewegung lediglich Bewegungskomponenten orthogonal zu den Gelenkachsen. Wenn die Gelenkachsen also z. B. exakt in Fahrzeuglängsrichtung orientiert sind, so kann die Spoilererweiterung durch das Viergelenk während der Verlagerung nur in Fahrzeugquerrichtung und Fahrzeughochrichtung bewegt werden, nicht jedoch in Fahrzeuglängsrichtung. Diese Einschränkung des Bewegungsablaufes bei Verwendung eines planaren Viergelenks wirkt sich mittelbar auf die ästhetische Gestaltungsfreiheit für die Veriagerungsbewegung und die Formgestaltung des Spoilers aus.

Insbesondere um diesbezüglich eine größere Gestaltungsfreiheit zu gewinnen, ist in einer bevorzugten Weiterbildung der Erfindung vorgesehen, dass die Gelenkachsen der beiden Viergelenke jeweils nicht-parallel sind. Damit lassen sich in der Praxis vorteilhaft kompliziertere, in ästhetischer Hinsicht jedoch vorteilhafte Verlagerungsvorgänge realisieren, etwa umfassend eine Überlagerung von Bewegungskomponenten in Querrichtung, Hochrichtung und Längsrichtung, sogar verbunden mit einer Veränderung der räumlichen Orientierung der Spoiler erweiterung während des Verlagerungsvorganges.

In einer besonders bevorzugten Ausführungsform ist z. B. vorgesehen, dass die Gelenkachsen der beiden Viergelenke sich jeweils in einem Punkt schneiden ("sphärisches Viergelenk").

Durch die Verwendung eines sphärischen Viergelenks zur Verlagerung der Spoilererweiterung lassen sich in der Praxis besonders interessante Bewegungsabläufe realisieren, die in ästhetischer Hinsicht insbesondere für gekrümmt verlaufende Kanten des Spoilerkorpus und/oder der Spoilererweiterungen interessant sind. Wenn z. B. der Spoilerkorpus von oben betrachtet insgesamt gekrümmt ist, also z. B. in gleicher Orientierung gekrümmte Vorder- und Hinterkanten besitzt, so kann mit einem sphärischen Viergelenk eine Auswärtsverlagerung der Spoilererweiterung realisiert werden, bei welcher die Spoilererweiterung entlang einer gekrümmten Bahn nach außen bzw. zurück nach innen verlagert wird. Die Krümmung der Verlagerungsbewegung kann hierbei vorteilhaft an die Krümmung des Spoilerkorpus angepasst vorgesehen sein.

In einer Ausführungsform mit sphärischem Viergelenk ist vorgesehen, dass der Schnittpunkt in Längsrichtung betrachtet vor dem Spoiler liegt. Diese Ausführungsform ist vor allem für Gestaltungen des Spoilerkorpus und/oder der Spoilererweiterung interessant, bei welchen die Vorderkante des Spoilerkorpus und/oder der Spoilererweiterung von vorne betrachtet konkav ist und/oder die Hinterkante des Spoilerkorpus und/oder der Spoilererweiterung von hinten betrachtet konvex ist. Dementsprechend ist es aus ästhetischer Hinsicht als Alternative oftmals günstig, wenn bei einer entgegengesetzten Krümmungsorientierung des Spoilerkorpus bzw. der Spoilererweiterung der Schnittpunkt in Längsrichtung betrachtet hinter dem Spoiler liegt.

Der Abstand zwischen dem Schnittpunkt des sphärischen Viergelenks und dem Spoiler bestimmt unmittelbar einen Krümmungsradius der Bewegungsbahn der Spoilererweiterung während des Veriagenrngsvorganges. Dieser Abstand kann somit in Anpassung an eine gewünschte Bewegungsbahn des Verlagerungsvorganges angepasst werden, die wiederum z. B. an einen gekrümmten Verlauf des Spoilerkorpus angepasst werden kann.

In einer Ausführungsform ist vorgesehen, dass der Abstand zwischen dem Schnittpunkt und jedem Punkt des Spoilers mindestens so groß ist wie die in Querrichtung betrachtete Ausdehnung des Spoilers mit seitwärts nach außen verlagerten Spoilererweiterungen. Eine derartige Bemessung des Abstands liefert für den Verlagerungsvorgang der Spoilererweiterung eine in der Praxis zumeist ausreichende Bewegungskomponente in Querrichtung. Damit andererseits eine nennenswerte Krümmung der Bewegungsbahn (Drehung der Spoilererweiterung während des Verlagerungsvorganges) erzielt werden kann, was insbesondere bei insgesamt gekrümmt gestalteten Spoilern in ästhetischer Hinsicht bevorzugt ist, sollte der Abstand zwischen dem Schnittpunkt und dem Spoiler jedoch auch nicht zu groß bemessen sein. In einer Ausführungsform ist daher vorgesehen, dass der Abstand zwischen dem Schnittpunkt und jedem Punkt des Spoilers höchstens so groß ist wie das Zehnfache, insbesondere Fünffache, der in Querrichtung betrachteten Ausdehnung des Spoilers mit seitwärts nach außen verlagerten Spoilererweiterungen.

Vor allem in ästhetischer Hinsicht hat sich bei Verwendung von sphärischen Viergelenken zur Verlagerung der beiden Spoilererweiterungen eine Ausführung als günstig herausgestellt, bei welcher die beiden Schnittpunkte der jeweiligen Gelenkachsen der beiden Viergelenke im Wesentlichen zusammenfallen. Neben einem exakten Zusammenfallen der beiden Schnittpunkte soll hiervon insbesondere auch der Fall umfasst sein, dass der Abstand zwischen den beiden Schnittpunkten höchstens so groß ist wie ein Zehntel der in Querrichtung betrachteten Ausdehnung des Spoilers mit seitwärts nach außen verlagerten Spoilererweiterungen.

Es versteht sich, dass aus Symmetriegründen in ästhetischer Hinsicht eine bezüglich einer vertikalen Längsmittelebene des Fahrzeugs symmetrische Gestaltung der Luftleitvorrichtung bzw. des Spoilers bevorzugt ist.

Die Erfindung wird nachfolgend anhand von Ausführungsbeispielen mit Bezug auf die beigefügten Zeichnungen näher erläutert. Es stellen dar:
- Fig. 1: eine perspektivische Ansicht des Heckbereichs eines Fahrzeugs mit einer Luftleitvorrichtung umfassend einen Spoiler, dargestellt in einer ersten Betriebsform,
- Fig. 2: eine der Fig. 1 entsprechende Ansicht für eine zweite Betriebsform des Spoilers,
- Fig. 3: eine perspektivische Ansicht von oben eines Fahrzeugheckbereichs mit einer Luftleitvorrichtung gemäß eines zweiten Ausführungsbeispiels, dargestellt im eingefahrenen Zustand,
- Fig. 4: eine perspektivische Detailansicht eines Spoilerkorpus der Luftleitvorrichtung von Fig. 3,
- Fig. 5: eine der Fig. 3 ähnliche Ansicht für eine Betriebsform des Spoilers,
- Fig. 6: eine perspektivische Detailansicht des Spoilerkorpus von Fig. 5,
- Fig. 7: eine Draufsicht des Spoilerkorpus zur Veranschaulichung des Verlaufs von Gelenkachsen, und
- Fig. 8: eine der Fig. 7 entsprechende Ansicht in verkleinertem Maßstab.

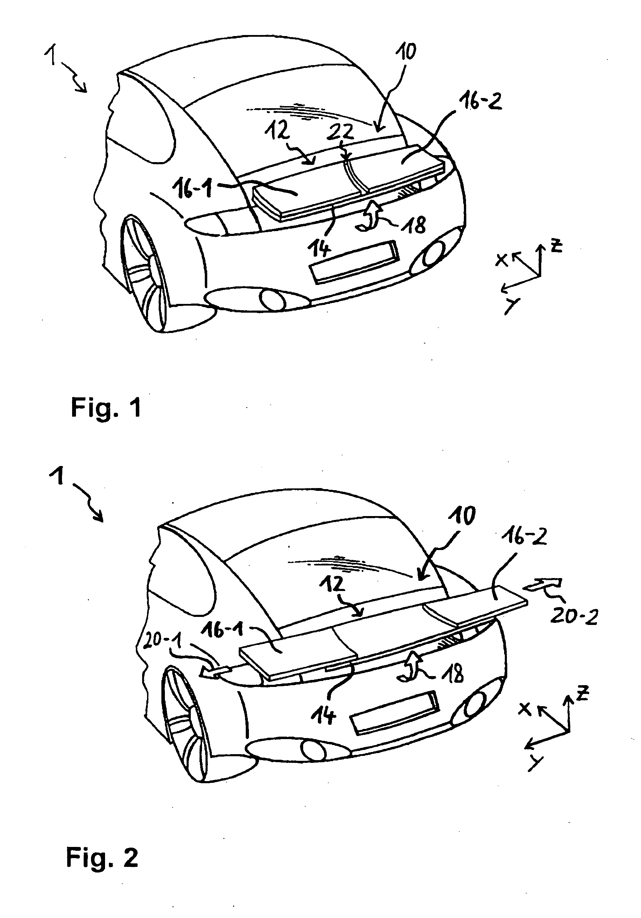

Fig. 1 zeigt eine im Heckbereich eines Kraftfahrzeugs 1 vorgesehene Luftleitvorrichtung 10, umfassend einen in Querrichtung y sich erstreckenden Spoiler 12 mit einem Spoilerkorpus 14 und auf beiden Seiten des Spoilerkorpus 14 angeordneten Spoilererweiterungen 16-1 (links) und 16-2 (rechts), die nachfolgend einzeln oder gemeinsam auch mit der Bezugszahl 16 bezeichnet werden. Die obere Spoileroberfläche ist gewissermaßen zweigeteilt aus den Spoilererweiterungen 16-1 und 16-2 gebildet.

Die Bezugszahlen von in einer Ausführungsform mehrfach vorgesehenen, in ihrer Wirkung jedoch analogen Komponenten, sind durchnumeriert (jeweils ergänzt durch einen Bindestrich und eine fortlaufende Zahl). Auf einzelne solcher Komponenten oder auf die Gesamtheit solcher Komponenten wird im Folgenden auch durch die nicht-ergänzte Bezugszahl Bezug genommen.

In den Fig. 1 und 2 ist der als ausfahrbarer Heckspoiler ausgebildete Spoiler 12 in seiner "Betriebsstellung" dargestellt, in welcher der Spoiler 12 die Fahrzeugkontur im Heckbereich überragt, um während der Fahrt des Fahrzeugs 1 eine aerodynamische Wirkung (insbesondere z. B. Abtrieb) bereitzustellen.

Eine "Ruhestellung" des Spoilers 12 ist in den Fig. 1 und 2 nicht dargestellt. In dieser Ruheform liegt der Spoiler 12 im Wesentlichen innerhalb der heckseitigen Fahrzeugkontur, nämlich teilweise versenkt in einer Karosseriemulde. Die (nicht dargestellte) Karosseriemulde befindet sich im Bereich zwischen einer Hinterkante einer Heckscheibe und einer Vorderkante eines Stoßfängerbereiches der Karosserie. Ausgehend von der Ruhestellung ist der in den Fig. 1 und 2 dargestellte Spoiler 12 durch eine verschwenkende Verstellung in die dargestellte Betriebsstellung verstellt worden (vgl. Pfeil 18). Zur Realisierung dieser Verstellung (Ausfahren und Einfahren des Spoilers) sind aus dem Stand der Technik vielfältige Möglichkeiten bekannt, auf welche im Rahmen der Erfindung vorteilhaft zurückgegriffen werden kann.

In Fig. 1 ist der Spoiler 12 in einer ersten Betriebsstellung gezeigt, bei welcher die beiden jeweils flächig horizontal ausgedehnten Spoilererweiterungen 16 insgesamt im Wesentlichen deckungsgleich zu dem ebenfalls flächig horizontal ausgedehnten Spoilerkorpus 14 an der Oberseite desselben angeordnet sind.

Die plattenförmigen Spoilererweiterungen 16 können ausgehend von der in Fig. 1 dargestellten Position in eine seitwärts nach außen verlagerte Position überführt werden, die in Fig. 2 dargestellt ist (vgl. Pfeile 20-1 bzw. 20-2). In dieser zweiten Betriebsstellung des Spoilers 12 ist somit die aerodynamisch wirksame Spoilerfläche vergrößert.

Der Spoiler 12 wird im dargestellten Ausführungsbeispiel in automatischer Weise abhängig von der Fahrzeuggeschwindigkeit betrieben. Bei Vorliegen eines bestimmten Ausfahrkriteriums, beispielsweise der Überschreitung einer ersten Grenzgeschwindigkeit, wird der Spoiler 12 aus seiner (nicht dargestellten) Ruhestellung nach hinten ausgefahren bzw. ausgestellt. Nach diesem Ausstellvorgang, der durch einen entsprechenden Antrieb (z. B. elektrisch, hydraulisch oder pneumatisch) des Spoilerkorpus 14 bewerkstelligt wird, oder bevorzugt bereits während des Ausfahrens werden außerdem die seitlichen Spoilerervueiterungen 16 nach außen verlagert. Wenngleich es möglich ist, ein und denselben Antrieb sowohl zum Bewegen des Spoilerkorpus 14 bezüglich der Fahrzeugkarosserie als auch zum Bewegen der seitlichen Spoilererweiterungen 16 bezüglich des Spoilerkorpus 14 zu verwenden, so ist in einer bevorzugten Ausführungsform vorgesehen, dass für die Verlagerung der Spoilererweiterungen 16 ein eigener Antrieb vorgesehen und im Spoilerkorpus 14 untergebracht ist.

Bei Vorliegen eines bestimmten Einfahrkriteriums, z. B. bei Unterschreiten einer zweiten Grenzgeschwindigkeit, wird der Spoiler 12 in einem umgekehrten Bewegungsablauf wieder in seine Ruhestellung eingefahren. Hierbei kann die Verlagerung der Spoilererweiterungen 16 nach innen wieder simultan mit dem entsprechenden Einzug des Spoilerkorpus 14 in die (nicht dargestellte) Karosseriemulde erfolgen.

Eine Besonderheit der dargestellten Luftleitvorrichtung 10 besteht darin, dass die Spoilererweiterungen 16 jeweils mittels eines Viergelenks am Spoilerkorpus 14 angelenkt sind, wobei die vier Gelenkachsen jedes Viergelenks jeweils im Wesentlichen in Längsrichtung x des Fahrzeugs 1 verlaufen.

Zwei der vier Gelenkachsen jedes Viergelenks sind hierbei ortsfest bezüglich des Spoilerkorpus 14, wohingegen die anderen beiden Gelenkachsen jeweils ortfest bezüglich der betreffenden Spoilererweiterung (16-1 oder 16-2) sind. Der die erweiterungsseitigen Gelenkachsen verbindende Abschnitt der betreffenden Spoilererweiterung 16 bildet somit die so genannte "Koppel" des betreffenden Viergelenks.

Bei dieser Viergelenkanordnung bewegen sich die beiden Spoilererweiterungen 16 ausgehend von der in Fig. 1 dargestellten Position jeweils auf einer etwa halbkreisförmigen Bewegungsbahn zu der in Fig. 2 dargestellten, nach außen verlagerten Stellung.

Bei diesem Verlagerungsvorgang, der in der y-z-Ebene erfolgt, behalten die Spoilererweiterungen 16 ihre Raumorientierung (hier: langgestreckt in x-Richtung) bei. Letzteres ist in einfacher Weise z. B. dadurch zu realisieren, dass bei jedem Viergelenk der gegenseitige Abstand der beiden korpusseitigen Gelenkachsen gleich groß wie der gegenseitige Abstand der erweiterungsseitigen Gelenkachsen gewählt wird und die beiden Lenker, welche die Spoilererweiterung mit dem Spoilerkorpus verbinden, ebenfalls gleich lang bemessen werden.

Das beschriebene Ausführungsbeispiel realisiert eine konstruktiv einfache Lösung zur Verlagerung der Spoilererweiterungen 16 nach außen.

Ein sowohl funktional als auch ästhetisch vorteilhaftes Detail besteht bei der dargestellten Ausführungsform darin, dass in einem Zustand des Spoilers 12 mit nach innen verlagerten Spoilererweiterungen 16 (Fig. 1) die von oben betrachtete Kontur der beiden Spoilererweiterungen im Wesentlichen deckungsgleich zu der von oben betrachteten Kontur des Spoilerkorpus 14 ist. Abweichend davon könnte jedoch auch ein geringerer "Überdeckungsgrad" vorgesehen sein, bei welchem in dem Zustand des Spoilers mit nach innen verlagerten Spoilererweiterungen diese Spoilererweiterungen bevorzugt jedoch wenigstens 50 % der von oben betrachteten Oberfläche des Spoilerkorpus überdecken. In diesem Fall ist es bevorzugt, wenn die seitlich äußeren Kantenverläufe der Spoilererweiterungen im Wesentlichen den seitlich äußeren Kantenverläufen des Spoilerkorpus folgen. Solche äußeren Kantenverläufe können abgerundet oder, wie in den Fig. 1 und 2 dargestellt, eckig vorgesehen sein.

Ferner ist es vorteilhaft, das in dem Zustand des Spoilers mit nach innen verlagerten Spoilererweiterungen (Fig. 1) ein allenfalls geringfügiger Spalt 22 zwischen den Innenkanten der beiden Spoilererweiterungen 16 vorhanden ist. In einer bevorzugten Ausführungsform liegen die beiden Innenkanten unmittelbar aneinander an.

Bei der nachfolgenden Beschreibung eines weiteren Ausführungsbeispiels werden für gleichwirkende Komponenten die gleichen Bezugszahlen verwendet, jeweils ergänzt durch einen kleinen Buchstaben "a" zur Unterscheidung der Ausführungsform. Dabei wird im Wesentlichen nur auf die Unterschiede zu dem bereits beschriebenen Ausführungsbeispiel eingegangen und im Übrigen hiermit ausdrücklich auf die Beschreibung des vorangegangenen Ausführungsbeispiels verwiesen.

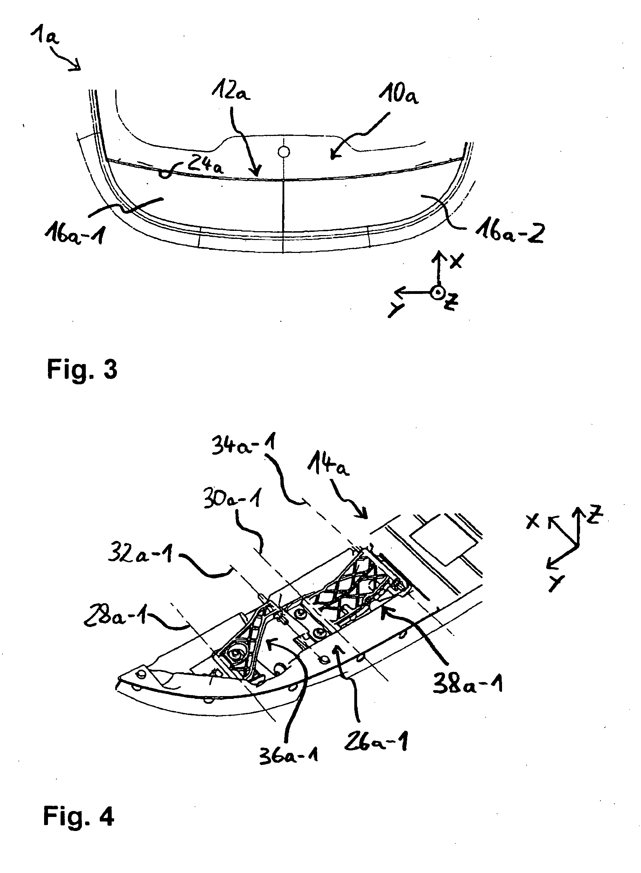

Die Fig. 3 bis 8 zeigen ein weiteres Ausführungsbeispiel einer Luftleitvorrichtung 10a am Heck eines Fahrzeugs 1a.

Fig. 3 zeigt einen Spoiler 12a der Luftleitvorrichtung 10a in seiner Ruhestellung, in welcher er in einer Karosseriemulde 24a versenkt ist. Die Karosseriemulde 24a ist hierbei so bemessen, dass, wie in Fig. 3 dargestellt, der Spoiler 12a mit nach innen verlagerten Spoilererweiterungen 16a-1 und 16a-2 in die Karosseriemulde 24a hineinpasst. Die Spoilervorderkante folgt hierbei der Kontur der Heckscheibenhinterkante.

In diesem Ausführungsbeispiel sind die von oben betrachteten Konturen der Spoilererweiterungen 16a, eines darunter angeordneten Spoilerkorpus 14a und der Karosseriemulde 24a im Wesentlichen deckungsgleich.

Die Vorderkante dieser Konturen ist von vorne betrachtet konkav, wohingegen die Hinterkante dieser Konturen von hinten betrachtet konvex ist. Der Spoiler 12a ist somit insgesamt derart gekrümmt, dass die Spoilerform im Verlauf nach außen (positive und negative y-Richtung) zunehmend auch etwas nach vorne (x-Richtung) verläuft.

Fig. 4 zeigt die linke Hälfte des in Fig. 3 von den Spoilererweiterungen 16a verdeckten Spoilerkorpus 14a. In dieser Figur ist die an der Oberseite des Spoilerkorpus 14a befindliche Spoilererweiterung 16a-1 weggelassen, um den Blick auf ein zur Verlagerbarkeit der Spoilererweiterung 16a-1 vorgesehenes Viergelenk 26a-1 freizugeben.

Die vier Gelenkachsen des Viergelenks 26a-1 sind in Fig. 4 mit 28a-1 (korpusseitig außen), 30a-1 (korpusseitig innen), 32a-1 (erweiterungsseitig außen) und 34a-1 (erweiterungsseitig innen) bezeichnet.

Die äußeren Gelenkachsen 28a-1 und 32a-1 sind mittels eines äußeren Lenkers 36a-1 miteinander verbunden, wohingegen die inneren Gelenkachsen 30a-1 und 34a-1 durch einen inneren Lenker 38a-1 miteinander verbunden sind.

Die beiden Lenker 36a-1 und 38a-1 sind wie aus Fig. 4 ersichtlich durch geeignete Drehlager an der Oberseite des Spoilerkorpus 14a um die Gelenkachsen 28a-1 bzw. 30a-1 verschwenkbar gelagert. An den entgegengesetzten Enden der Lenker 36a-1 und 38a-1 sind diese an der Unterseite der Spoilererweiterung 16a-1 um die Gelenkachsen 32a-1 bzw. 34a-1 verschwenkbar gelagert.

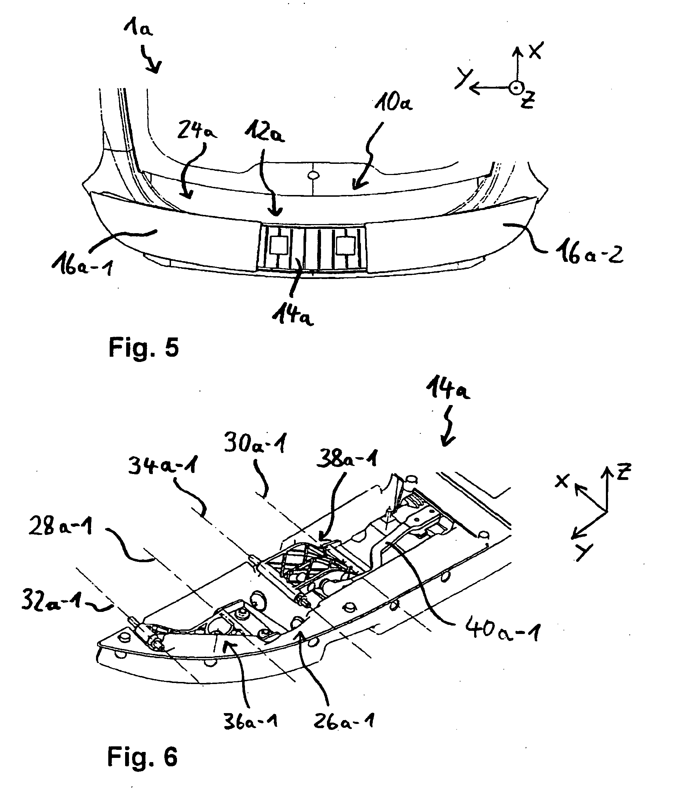

Fig. 5 zeigt in einer der Fig. 3 entsprechenden Ansicht den Zustand des Spoilers 12a, nachdem dieser durch eine nicht dargestellte Verstellmechanik aus der Karosseriemulde 24a nach oben und hinten herausgefahren wurde und die seitlichen Spoilererweiterungen 16a-1 und 16a-2 jeweils mittels des zugeordneten Viergelenks 36a nach außen verlagert wurden. Bei dieser Verlagerung sind die Spoilererweiterungen 16a-1 und 16a-2 mit geringst möglicher Abweichung der Spoilerkontur gefolgt. In diesem nach außen verlagerten Zustand ist die effektive Spoilerfläche verbreitert.

Fig. 6 zeigt in einer der Fig. 4 entsprechenden Ansicht wieder die linke Hälfte des Spoilerkorpus 14a, jedoch mit der entsprechend nach außen verschwenkten Stellung der Lenker 36a-1 und 38a-1.

In dem Spoilerzustand gemäß Fig. 6 (verbreiterter Spoiler) würde der Spoiler 12a nicht in die Karosseriemulde 24a passen. Vor oder bevorzugt während des Einfahrens des Spoilers 12a werden die Spoilererweiterungen 16a daher bezüglich des Spoilerkorpus 14a wieder jeweils nach innen verlagert.

In Fig. 6 ist auch gut ein Antriebslenker 40a-1 erkennbar, der den inneren Lenker 38a-1 mit einem im Zentrum des Spoilerkorpus 14a untergebrachten Antrieb (z. B. Elektromotor mit Getriebe) verbindet.

Das in Fig. 6 linke Ende des Antriebslenkers 40a-1 ist in einem mittleren Bereich des inneren Lenkers 38a-1 angelenkt, so dass durch eine entsprechende Bewegung des Antriebslenkers 40a-1 die Verschwenkung des inneren Lenkers 38a-1 bewerkstelligt werden kann (Der äußere Lenker 36a-1 wird als Teil des Viergelenks 26a-1 zwangsweise mitverschwenkt).

Vorteilhaft kann der (nicht dargestellte) motorische Antrieb im Spoilerkorpus 14a für beide Viergelenke 26a genutzt werden, um die Spoilererweiterungen 16a-1 und 16a-2 synchron zu bewegen.

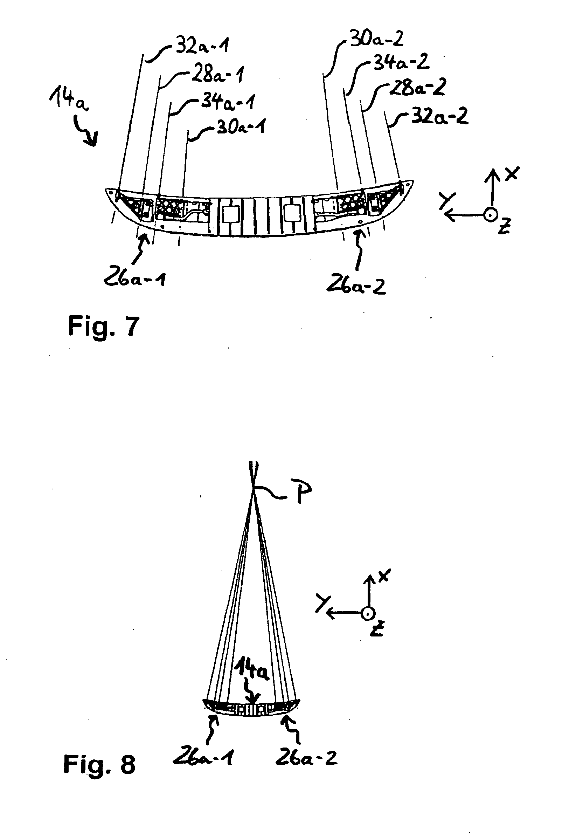

Fig. 7 zeigt den Spoilerkorpus 14a von oben betrachtet in der Betriebsstellung gemäß der Fig. 3 und 4, wobei die Spoilererweiterungen 16a-1 und 16a-2 wieder weggelassen sind, um den Blick auf die beiden seitlichen Viergelenke 26a-1 und 26a-2 freizugeben.

Fig. 8 ist schließlich eine der Fig. 7 entsprechende Ansicht in einem weiter verkleinerten Maßstab.

Ein wesentlicher Unterschied der Luftleitvorrichtung 10a gemäß der Fig. 3 bis 8 gegenüber der Luftleitvorrichtung 10 gemäß der Fig. 1 und 2 besteht darin, das die Gelenkachsen 28a, 30a, 32a und 34a des linken Viergelenks 26a-1 nicht parallel zu denjenigen des rechten Viergelenks 26a-2 verlaufen (vgl. Fig. 7 und. 8). Es gibt Winkel zwischen den ganzen in Fig. 7 dargestellten Gelenkachsen, die größer als 10° sind. Aufgrund der insgesamt symmetrischen Gestaltung der Luftleitvorrichtung 10a hat dies zur Folge, dass beide Spoilererweiterungen 16a-1 und 16a-2 bei ihrer Verlagerung nach außen gleichzeitig auch etwas nach vorne (in x-Richtung) bewegt werden.

Die jeweiligen vier Gelenkachsen eines der beiden Viergelenke 26a-1 und 26a-2 könnten hierbei exakt parallel zueinander angeordnet sein, mit anderen Worten jeweils als ein planares Viergelenk ausgebildet sein. Bei dem Ausführungsbeispiel gemäß der Fig. 3 bis 8 ist dies jedoch nicht der Fall. Wie es insbesondere aus Fig. 8 ersichtlich ist, verlaufen auch die vier Gelenkachsen eines einzelnen Viergelenks nicht exakt parallel zueinander, sondern schneiden sich in einem Schnittpunkt. Jeder Winkel zwischen unmittelbar benachbarten Gelenkachsen in der Darstellung gemäß Fig. 7 und 8 des linken Viergelenks 26a-1 beträgt mindestens 1 °. Dasselbe gilt für die Gelenkachsen des rechten Viergelenks 26a-2.

Mit anderen Worten ist jedes der beiden Viergelenke 26a-1 und 26a-2 als ein so genanntes sphärisches Viergelenk ausgebildet. Die betreffenden Spoilererweiterungen 16a-1 bzw. 16a-2 werden demnach auf einer gekrümmten Bewegungsbahn seitwärts nach außen und nach vorne unter gleichzeitiger Veränderung ihrer Orientierung bewegt. Bei dem dargestellten Ausführungsbeispiel beginnt die Verlagerungsbewegung der Spoilererweiterungen 16a nach außen jeweils etwa in der y-z-Ebene. Bei der weiteren Auswärtsverlagerung läuft die Bewegung jedoch aus dieser Ebene heraus (nach vorne).

Die beiden Schnittpunkte für die beiden Viergelenke 26a-1 und 26a-2 können sich hierbei an verschiedenen Stellen befinden. Bei dem dargestellten Ausführungsbeispiel fallen diese beiden Schnittpunkte jedoch zusammen. Dieser gemeinsame Schnittpunkt ist in Fig. 8 ersichtlich und mit P bezeichnet. In diesem vorteilhaften Spezialfall liegen die beiden Bewegungsbahnen der Spoilererweiterungen 16a-1 und 16a-2 auf einer gemeinsamen Kugeloberfläche, um den gemeinsamen Schnittpunkt P herum.

Zusammenfassend werden mit den oben beschriebenen Ausführungsbeispielen Luftleitvorrichtungen mit einem seitlich erweiterbaren Spoiler geschaffen, bei welchem die zur Erweiterbarkeit verwendete Mechanik konstruktiv einfach aufgebaut ist, wobei dennoch eine große gestalterische Freiheit belassen ist.

Wenngleich die Verwendung der erfindungsgemäßen Verlagerungsmechanik besonders vorteilhaft für ausfahrbare Spoiler einsetzbar ist, so soll keineswegs ausgeschlossen sein, dass die beschriebene Art und Weise der Verlagerung von Spoilererweiterungen für einen feststehenden Spoiler verwendet wird.

In gestalterischer Hinsicht kann mit der Erfindung vorteilhaft z. B. dem Umstand Rechnung getragen werden, dass im Heck eines Kraftfahrzeugs eingebaute Spoiler zumeist mit ihrer Vorderkante im eingefahrenen Zustand direkt benachbart an der Hinterkante einer Heckscheibe oder mit ihrer Hinterkante an eine Karosseriekante im Heckbereich des Fahrzeugs anschließen sollen.

Entsprechende Begrenzungen für die Kontur des Spoilerblattes sind in den meisten Fällen daher nicht geradlinig sondern gekrümmt. Bei den oben beschriebenen Ausführungsbeispielen ist ein Spoilerblatt verwirklicht, welches im ausgefahrenen Zustand eine größere Fläche als im eingefahrenen Zustand aufweist. Die Spoileroberfläche ist in diesen Beispielen in der Fahrzeugmitte geteilt, wobei diese Hälften (Spoilererweiterungen) an jeweils einem Viergelenk geführt nach außen versetzt werden können.

Bei dem Ausführungsbeispiel gemäß der Fig. 1 und 2 besteht aufgrund der Verwendung von planaren Viergelenken ein gewisser Nachteil im Hinblick auf ein harmonisches Aussehen des Spoilers und einen möglichst geringen Platzbedarf. Mit solchen planaren Viergelenken können die auszufahrenden seitlichen Spoilerflügel in ihrem Bewegungsablauf nicht einer gekrümmten Kontur folgen (z. B. in Anpassung an eine Krümmung des Spoilerkorpus), da sie sich jeweils nur auf einer Ebene bewegen können.

Diese gestalterische Einschränkung ist jedoch bei Ausführungsbeispiel gemäß der Fig. 3 bis 8 durch eine entsprechende Auslegung der Viergelenke als sphärische Viergelenke vermieden. Bei dieser Variante können die auszufahrenden Spoilererweiterungen in ihrem Bewegungsablauf einer gekrümmten Kontur des Spoilerkorpus folgen. Die Bewegung ist nicht auf eine Ebene (z. B. die y-z-Ebene) beschränkt. Bei dieser Variante können außerdem sehr gut Spalte zwischen dem Spoilerkorpus und den Spoilererweiterungen klein gehalten bzw. ganz vermieden werden, die eine Durchströmung von Luft ermöglichen und dadurch die Wirkung des Spoilers reduzieren würden.

### Bezugszeichenliste

- 10: Luftleitvorrichtung
- 12: Spoiler
- 14: Spoilerkorpus
- 16: Spoilererweiterungen
- 18: Verstellung des Spoilerkorpus
- 20: Verstellung der Spoilererweiterungen
- 22: Spalt
- 24: Karosseriemulde
- 26: Viergelenk
- 28: Gelenkachse
- 30: Gelenkachse
- 32: Gelenkachse
- 34: Gelenkachse
- 36: äußerer Lenker
- 38: innerer Lenker
- 40: Antriebslenker
- P: gemeinsamer Schnittpunkt

## Patentansprüche

1. Luftleitvorrichtung eines Fahrzeugs (1), insbesondere am Fahrzeugheck ausfahrbare Luftleitvorrichtung, umfassend einen in Querrichtung (y) sich erstreckenden Spoiler (12) mit einem Spoilerkorpus (14) und auf beiden Seiten des Spoilerkorpus angeordneten Spoilererweiterungen (16), die bezüglich des Spoilerkorpus (14) seitwärts nach außen verlagerbar sind,
**dadurch gekennzeichnet, dass** die Spoilererweiterungen (16) jeweils mittels eines im Wesentlichen in Längsrichtung (x) verlaufende Gelenkachsen (28, 30, 32, 34) aufweisenden Viergelenks (26) am Spoilerkorpus (14) angelenkt sind.

2. Luftleitvorrichtung nach Anspruch 1, wobei der Spoiler (12) aus einer Ruhestellung, in welcher er in einer Karosseriemulde (24) angeordnet ist, in eine Betriebsstellung ausgefahren werden kann, in welcher er von der Karosserie abstehend angeordnet ist.

3. Luftleitvorrichtung nach einem der vorangehenden Ansprüche, wobei in einem Zustand des Spoilers (12) mit nach innen verlagerten Spoilererweiterungen (16) ein allenfalls geringfügiger Spalt (22) zwischen den Innenkanten der beiden Spoilererweiterungen (16) vorhanden ist und/oder Außenkanten der beiden Spoilererweiterungen (16) in Querrichtung (y) betrachtet im Wesentlichen an der gleichen Stelle wie die Außenkanten des Spoilerkorpus (14) liegen.

4. Luftleitvorrichtung nach einem der vorangehenden Ansprüche, wobei in einem Zustand des Spoilers (12) mit nach innen verlagerten Spoilererweiterungen (16) eine von oben betrachtete Kontur der beiden Spoilererweiterungen (16) im Wesentlichen deckungsgleich zu der von oben betrachteten Kontur des Spoilerkorpus (14) ist.

5. Luftleitvorrichtung nach einem der vorangehenden Ansprüche, wobei die Spoilererweiterungen (16) an der Oberseite des Spoilerkorpus (14) angelenkt sind.

6. Luftleitvorrichtung nach einem der vorangehenden Ansprüche, wobei die Vorderkante des Spoilerkorpus (14) gekrümmt verläuft.

7. Luftleitvorrichtung nach einem der vorangehenden Ansprüche, wobei die Hinterkante des Spoilerkorpus (14) gekrümmt verläuft.

8. Luftleitvorrichtung nach einem der vorangehenden Ansprüche, wobei die Gelenkachsen (28, 30, 32, 34) der beiden Viergelenke (26) sich jeweils in einem Punkt (P) schneiden.

9. Luftleitvorrichtung nach Anspruch 8, wobei der Schnittpunkt (P) in Längsrichtung (x) betrachtet vor dem Spoiler (12) liegt.

10. Luftleitvorrichtung nach Anspruch 8 oder 9, wobei der Abstand zwischen dem Schnittpunkt (P) und jedem Punkt des Spoilers (12) mindestens so groß ist wie die in Querrichtung (y) betrachtete Ausdehnung des Spoilers (12) mit seitwärts nach außen verlagerten Spoilererweiterungen (16).

11. Luftleitvorrichtung nach einem der Ansprüche 8 bis 10, wobei die beiden Schnittpunkte (P) der jeweiligen Gelenkachsen (28, 30, 32, 34) der beiden Viergelenke (26) im Wesentlichen zusammenfallen.

## Claims

1. Air-directing apparatus of a vehicle (1), in particular deployable air-directing apparatus at the vehicle rear end, comprising a spoiler (12) which extends in the transverse direction (y) and which has a spoiler body (14) and spoiler extensions (16) arranged on both sides of the spoiler body, which spoiler extensions (16) can be moved outwards sideways in relation to the spoiler body (14),
**characterized in that** the spoiler extensions (16) are articulatedly connected to the spoiler body (14) in each case by means of a four-bar mechanism (26) which has joint axes (28, 30, 32, 34) running substantially in the longitudinal direction (x).

2. Air-directing apparatus according to Claim 1, with it being possible for the spoiler (12) to be deployed from a rest position, in which it is arranged in a body depression (24), into an operating position, in which it is arranged so as to protrude from the body.

3. Air-directing apparatus according to one of the preceding claims, wherein when the spoiler (12) is in a state with the spoiler extensions (16) having been moved inwards, at most a small gap (22) is present between the inner edges of the two spoiler extensions (16), and/or outer edges of the two spoiler extensions (16) are situated at substantially the same point as the outer edges of the spoiler body as viewed in the transverse direction (y).

4. Air-directing apparatus according to one of the preceding claims, wherein when the spoiler (12) is in a state with the spoiler extensions (16) having been moved inwards, a contour of the two spoiler extensions (16) as viewed from above is substantially congruent with the contour of the spoiler body (14) as viewed from above.

5. Air-directing apparatus according to one of the preceding claims, with the spoiler extensions (16) being articulatedly connected to the upper side of the spoiler body (14).

6. Air-directing apparatus according to one of the preceding claims, with the leading edge of the spoiler body (14) running in a curved fashion.

7. Air-directing apparatus according to one of the preceding claims, with the trailing edge of the spoiler body (14) running in a curved fashion.

8. Air-directing apparatus according to one of the preceding claims, with the joint axes (28, 30, 32, 34) of the two four-bar mechanisms (26) intersecting in each case at one point (P).

9. Air-directing apparatus according to Claim 8, with the point of intersection (P) being situated in front of the spoiler (12) as viewed in the longitudinal direction (x).

10. Air-directing apparatus according to Claim 8 or 9, with the distance between the point of intersection (P) and any point of the spoiler (12) being at least as large as the extent of the spoiler (12), with the spoiler extensions (16) having been moved outwards sideways, as viewed in the transverse direction (y).

11. Air-directing apparatus according to one of Claims 8 to 10, with the two points of intersection (P) of the respective joint axes (28, 30, 32, 34) of the two four-bar mechanisms (26) substantially coinciding.

## Revendications

1. Dispositif de guidage d'air d'un véhicule (1), notamment dispositif de guidage d'air pouvant être déployé à l'arrière du véhicule, comprenant un spoiler (12) s'étendant dans la direction transversale (y) avec un corps de spoiler (14) et des élargissements de spoiler (16) disposés des deux côtés du corps de spoiler, qui peuvent être décalés latéralement vers l'extérieur par rapport au corps de spoiler (14),
**caractérisé en ce que**
les élargissements de spoiler (16) sont à chaque fois articulés sur le corps de spoiler (14) au moyen d'un quadrilatère articulé (26) présentant des axes d'articulation (28, 30, 32, 34) s'étendant essentiellement dans la direction longitudinale (x).

2. Dispositif de guidage d'air selon la revendication 1, dans lequel le spoiler (12) peut être déployé à partir d'une position de repos dans laquelle il est disposé dans un creux de la carrosserie (24), dans une position de fonctionnement dans laquelle il fait saillie hors de la carrosserie.

3. Dispositif de guidage d'air selon l'une quelconque des revendications précédentes, dans lequel, dans un état du spoiler (12) avec des élargissements de spoiler (16) décalés vers l'intérieur, est prévue une fente (22) tout du plus petite, entre les arêtes intérieures des deux élargissements de spoiler (16) et/ou des arêtes extérieures des deux élargissements de spoiler (16), vues dans la direction transversale (y), se situent essentiellement au même endroit que les arêtes extérieures du corps de spoiler (14).

4. Dispositif de guidage d'air selon l'une quelconque des revendications précédentes, dans lequel, dans un état du spoiler (12) avec des élargissements de spoiler (16) décalés vers l'intérieur, un contour, vu de dessus, des deux élargissements de spoiler (16), est essentiellement en coïncidence avec le contour, vu de dessus, du corps de spoiler (14).

5. Dispositif de guidage d'air selon l'une quelconque des revendications précédentes, dans lequel les élargissements de spoiler (16) sont articulés au côté supérieur du corps de spoiler (14).

6. Dispositif de guidage d'air selon l'une quelconque des revendications précédentes, dans lequel l'arête avant du corps de spoiler (14) s'étend sous forme courbe.

7. Dispositif de guidage d'air selon l'une quelconque des revendications précédentes, dans lequel l'arête arrière du corps de spoiler (14) s'étend sous forme courbe.

8. Dispositif de guidage d'air selon l'une quelconque des revendications précédentes, dans lequel les axes d'articulation (28, 30, 32, 34) des deux quadrilatères articulés (26) se coupent à chaque fois en un point (P).

9. Dispositif de guidage d'air selon la revendication 8, dans lequel le point d'intersection (P) se situe avant le spoiler (12), vu dans la direction longitudinale (x).

10. Dispositif de guidage d'air selon la revendication 8 ou 9, dans lequel la distance entre le point d'intersection (P) et chaque point du spoiler (12) est au moins aussi grande que l'étendue du spoiler (12) dans la direction transversale (y) avec les élargissements de spoiler (16) décalés latéralement vers l'extérieur.

11. Dispositif de guidage d'air selon l'une quelconque des revendications 8 à 10, dans lequel les deux points d'intersection (P) des axes d'articulation respectifs (28, 30, 32, 34) des deux quadrilatères articulés (26) coïncident sensiblement.
